# EUROPÄISCHE PATENTSCHRIFT

(11) **EP 0 439 641 B1**
(45) Veröffentlichungstag und Bekanntmachung des Hinweises auf die Patenterteilung: **23.03.1994**
(21) Anmeldenummer: 90101719.4
(22) Anmeldetag: 29.01.1990
(51) Int. Cl.: H04M 19/08, H04M 1/76

(54) **Verfahren und Anordnung zur Bildung des Leitungsabschlusses einer Telefonleitung**
Method and device for forming the line termination of a telephone line
Procédé et dispositif pour la réalisation de l'interface d'une ligne téléphonique

(43) Veröffentlichungstag der Anmeldung: 07.08.1991
(73) Patentinhaber: SIEMENS AKTIENGESELLSCHAFT, 80333 München (DE)
(72) Erfinder: Dielacher, Franz, Dipl.-Ing., A-9500 Villach (AT); Wallnberger, Gerald, Dipl.-Ing., A-9500 Villach (AT); Formanek, Karl, A-1110 Wien (AT)

(56) Entgegenhaltungen:
- EP-A- 0 263 416
- EP-A- 0 271 946
- US-A- 4 723 278

## Beschreibung

Die Erfindung betrifft ein Verfahren zur Bildung des Leitungsabschlusses an zwei Leitungsklemmen einer Telefonleitung und einer Anordnung zur Durchführung des Verfahrens.

In einer Telefonanlage ist jedes Telefon über zwei Leitungsklemmen mit einer Telefonleitung verbunden und empfängt über die Telefonvermittlung des Amtes über die Telefonleitung Leitungssignale, die sich aus Gleich- und Wechselsignalen zusammensetzen. Die Gleichsignale dienen zur Erzeugung einer für den Betrieb der Anlage erforderlichen Gleichsignalkennlinie und die Wechselsignale bilden das Empfangssignal. Darüberhinaus werden die Gleichsignale mit einem Sendesignal moduliert, das mit Hilfe des Telefons erzeugt und über die Telefonleitung übertragen wird. Um optimale Übertragungsbedingungen zu gewährleisten muß die Telefonleitung mit einer vorgegebenen Impedanz abgeschlossen werden. Üblicherweise ist ein Widerstand vorgesehen, der in der Größenordnung 600 Ohm liegt.

Aus der EP-A-0154 366 ist eine Anordnung bekannt, die die Gleichsignalgrößen durch eine Regelschaltung stabilisiert. Der Abschlußwiderstand, der gleich dem Wechselsignal-Innenwiderstand der Sprechschaltungsanordnung ist, liegt nicht im Regelkreis der Anordnung. An ihm wird deshalb ein Spannungsabfall erzeugt, durch den die üblicherweise geforderte Spannungsversorgung externer Baugruppen der Sprechschaltung verschlechtert wird.

Aus der EP-A-0263 416 ist eine elektronische Sprechschaltungsanordnung bekannt, die für den Leitungsstrom lediglich einen Stromfühlerwiderstand benötigt, gleichzeitig aber eine Gleichsignalregelung ermöglicht und die geforderte Leitungsabschlußimpedanz durch aktive Schaltelemente mit Hilfe einer Brückenschaltung realisiert. Eine Anpassung an die Telefonleitung ist durch ein Auswechseln externer Bauelemente der integrierten Brückenschaltung möglich.

Infolge zunehmender Integrationsdichten ist es wünschenswert, zur Erhöhung der Zuverlässigkeit und der Bedienungsvereinfachung Verfahren und Anordnungen zu verwenden, die mit möglichst wenigen externen Bauelementen auskommen und teure Übertrager ersparen.

Die Erfindung hat deshalb als Ziel, eine weitere Möglichkeit zur Bildung des Leitungsabschlusses an zwei Leitungsklemmen einer Telefonleitung zu geben.

Dies wird bei einem Verfahren der genannten Art durch die kennzeichnenden Merkmale des Patentanspruchs 1 erreicht. Weiter wird dies mit einer Anordnung gemäß den kennzeichnenden Merkmalen des Patentanspruchs 3 erreicht.

Die Erfindung hat den Vorteil, daß die Wechselsignale in eine Regelung einbezogen sind und somit die Leitungsabschlußimpedanz äußerst präzise realisiert werden kann. Weiterhin kann eine weitere Regelung für die Gleichsignale vorgesehen werden, die von der Regelung der Wechselsignale entkoppelt ist. Die Erfindung ermöglicht eine Zweidraht-Vierdraht-Umsetzung mit elektronischen Mitteln. Weiterhin kann die Erfindung grundsätzlich auf einem einzigen Chip realisiert werden. Schließlich ist eine Anpassung an die Telefonleitung dadurch möglich, daß die verwendeten Übertragungsnetzwerke einstellbar bzw. programmierbar sind.

Ausgestaltungen des Erfindungsgedankens sind in Unteransprüchen gekennzeichnet.

Die Erfindung wird nachfolgend anhand von in den Figuren der Zeichnung dargestellten Ausführungsbeispielen näher erläutert. Es zeigt:
- Figur 1: ein Prinzipschaltbild einer erfindungsgemäßen Anordnung mit geregelter Abschlußimpedanz, geregelter Gleichsignalkennlinie und Zweidraht-Vierdraht-Umsetzung,
- Figur 2: ein Prinzipsachaltbild einer erfindungsgemäßen geregelten Wechselsignalanordnung,
- Figur 3a: einen Prinzipregelkreis für eine Empfangssignalregelung
- Figur 3b: einen Prinzipregelkreis für eine Sendesignalregelung,
- Figur 4: ein Prinzipschaltbild einer Gleichsignalregelung mit vorgegebener Kennlinie,
- Figur 5: ein Diagramm zur Erläuterung der Gleichsignalkennlinie,
- Figur 6: ein Prinzipschaltbild eines elektronischen Impedanz-Übertragungsnetzwerks,
- Figur 7: ein Prinzipschaltbild einer elektronischen Gleich- und Wechelsignal-Trennanordnung und
- Figur 8: ein Prinzipbild eines Komparators.

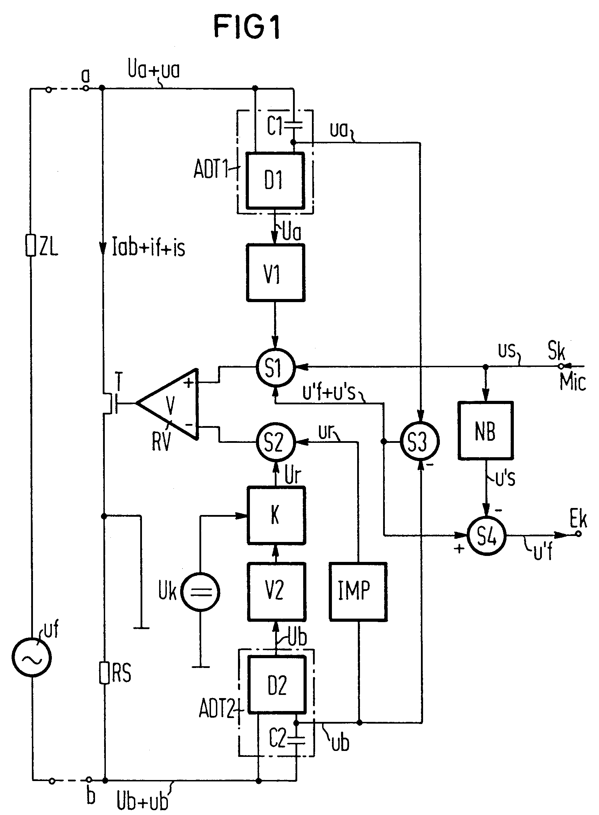

Gemäß Figur 1 ist die erfindungsgemäße Anordnung über die Klemmen a und b mit einer Telefonleitung verbindbar, die den Leitungswiderstand ZL hat und amtsseitig vom Signal uf eines fernen Teilnehmers gespeist wird. Die erfindungsgemäße Anordnung enthält einen Regelverstärker RV, der einen Stelltransistor T speist. Ausgangsseitig ist der Stelltransistor T mit einem zugeordneten Stromfühlerwiderstand RS zwischen die Leitungsklemmen a und b geschaltet. Der Verbindungspunkt des Stelltransistors T mit dem Stromfühlerwiderstand RS liegt auf Bezugspotential . Der durch den Stelltransistor T und den Stromfühlerwiderstand RS entsprechend der Gleichsignalkennlinie fließende, amtsseitig bestimmte Gleichstrom Iab, der dem Signal des ferneren Teilnehmers entsprechende Wechselstrom if und der dem Signal des Senders entsprechende Strom is erzeugen an den Klemmen a und b die Gleichspannungen Ua bzw. Ub und die Wechselspannungen ua und ub.

Mit Hilfe der beiden Funktionsblöcke ADT1 und ADT2 werden die an den Klemmen anliegenden Gleich- und Wechselsignale jeweils voneinander getrennt. Zur Entkopplung der Wechselsignale von den Gleichsignalen dienen die Entkopplungskondensatoren C1 und C2.

Zur Entkopplung können auch Hochpässe eingesetzt werden, die etwa mit der continuous-time-Technik als aktive integrierbare Filter ausgeführt sein können. Als Grenzfrequenz sind beispielsweise 100 Hz ausreichend.

An den Eingängen der jeweils nachfolgenden Subtrahierer oder Differenzverstärker D1 bzw. D2 liegen dann zum einen die Signale an den Klemmen a und b und zum anderen die Wechselsignale ua und ub, an den Ausgängen demzufolge die Gleichspannungen Ua und Ub. Die Gleichspannung Ua wird im Verstärker V1 verstärkt und über einen Summierer S1 mit dem positiven Eingang des Verstärkers RV verbunden. Die Gleichspannung Ub wird im Verstärker V2 verstärkt und in einem Komparator K mit einer Knickspannung Uk verglichen. Am Ausgang des Komparators K liegt ein Signal Ur, das über den Summierer S2 an den invertierenden Eingang des Regelverstärkers RV gelegt ist und mit dem das Gleichsignal am nicht invertierenden Eingang des Regelverstärkers verglichen wird. Das Gleichsignal Ur entsteht somit durch Bewertung des Gleichsignals Ub mit einer aus den Elementen V2, Uk und dem Komparator gebildeten Gleichsignalkennlinien-Übertragungsfunktion.

Das Wechselsignal ub der Klemme b wird einerseits mit Hilfe eines Impedanzübertragungsnetzwerks IMP mit einer Impedanzübertragungsfunktion bewertet, so daß sich ein Referenzsignal ur ergibt, das ebenfalls über den Summierer S2 an den invertierenden Eingang des Regelverstärkers gelegt wird und als Vergleichssignal dient. Das Wechselsignal ub wird andererseits im Subtrahierer S3 vom Wechselsignal ua subtrahiert. Am Ausgang des Subtrahierers S3 liegt somit die Wechselspannung der a/b-Leitungsklemmen auf Bezugspotential bezogen. Diese Subtraktion ist erforderlich, da an der Anordnung alle Spannungen auf Bezugspotential bezogen sind. Das Ausgangssignal des Subtrahierers S3 wird einerseits ebenfalls über den Summierer S1 mit dem nicht invertierenden Eingang des Regelverstärkers RV verbunden und andererseits mit einem Summierer S4. Ein an einer Sendeklemme Sk beispielsweise über ein Mikrofon Mic einspeisbares Sendesignal us wird ebenfalls über den Summierer S1 an den nicht invertierenden Eingang des Regelverstärkers RV gelegt und andererseits über ein Anpassungsnetzwerk NB mit einer Anpassungsübertragungsfunktion bewertet. Der Ausgang des Netzwerks NB führt die Wechselspannung u's, die im Subtrahierer S4 vom Ausgangssignal des Subtrahierers S3 subtrahiert wird. Der Ausgang des Subtrahierers S4 ist mit einer Empfangsklemme Ek verbunden, an der ein Empfangssignal u'f anliegt. Das sich am Ausgang des Subtrahierers S3 ergebende, auf Bezugspotential bezogene Signal beträgt u'f plus das Signal u's.

Grundsätzlich sind alle Elemente, die das Prinzipschaltbild der zwischen den Klemmen a und b liegenden Anordnung realisieren, auf einem Chip integrierbar. Der Stromfühlerwiderstand RS dient dabei zur Messung des durch die Klemmen a und b fließenden Gleich- und Wechselstroms und soll möglichst genau sein. Wenn ein Abgleich aufgrund der Integrationstechnik nicht oder nur schwer möglich ist, wird ein diskreter Stromfühlerwiderstand eingesetzt. Da an den Klemmen a und b Spannungsspitzen bis 200 V und Ströme größer 100 mA auftreten können, muß der Stelltransistor T ein Leistungstransistor sein. Der Leistungstransistor kann in speziellen Technologien integriert werden; ansonsten wird ein diskreter Typ, beispielsweise ein SIPMOS gewählt. Entkopplungskondensatoren mit großen Kapazitäten lassen sich praktisch nicht integrieren. Für eine integrierte Entkopplung werden vorzugsweise aktive Hochpaßfilter mit entsprechend niedriger Grenzfrequenz eingesetzt. Der Stelltransistor T wird vom Regelverstärker RV so gesteuert, daß an den Leitungsklemmen eine vorgegebene Abschlußimpedanz und Gleichsignalkennlinie auftritt. Gleichzeitig ermöglicht die Schaltung die Zweidraht-Vierdraht-Umsetzung.

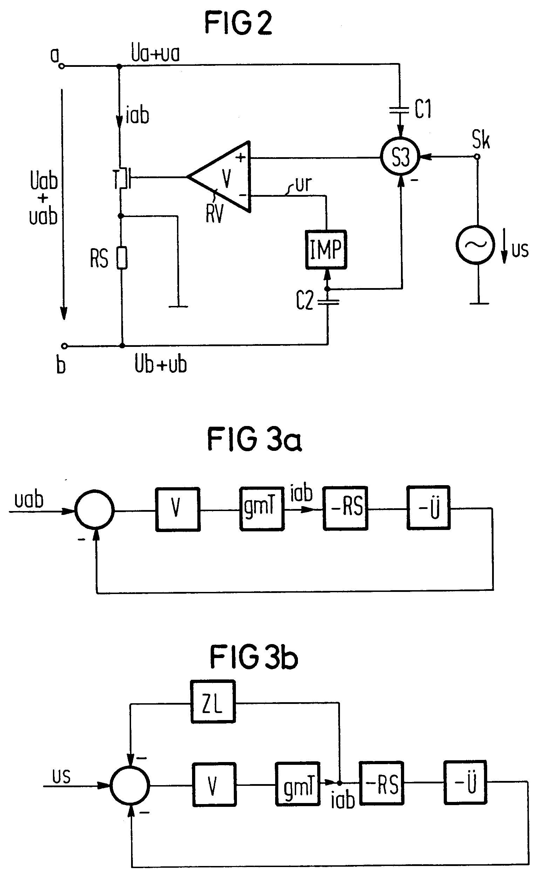

Die Funktion der in FIG 1 gezeigten Leitungsabschlußanordnung wird anschaulich anhand nachfolgender Detail-Prinzipschaltbilder erläutert. FIG 2 zeigt das Prinzip des erfindungsgemäßen Verfahrens an dem für die Wechselsignale vorgesehenen Regelkreis. Der Regelverstärker RV steuert den Stelltransistor T mit zugeordnetem Stromfühlerwiderstand RS, die zwischen den Klemmen a und b liegen und den Wechselstrom iab führen. Die Spannung zwischen den Klemmen a und b setzt sich zusammen aus der Gleichspannung Uab und der Wechselspannung uab. Die Wechselspannungen an den Leitungsklemmen a und b werden mit Hilfe der Koppelkondensatoren C1 und C2 von den an den Leitungsklemmen liegenden Gleichspannungen getrennt, im Summierer S3 auf Bezugspotential bezogen und zu einem Sendesignal us an der Sendeklemme Sk summiert. Das Ausgangssignal von S3 liegt am nicht invertierenden Eingang des Regelverstärkers RV. Der Wechselstrom iab wird am Stromfühlerwiderstand RS in eine Spannung ub umgesetzt, die im Netzwerk IMP mit der Impedanzübertragungsfunktion bewertet wird und als Referenzspannung ur an den invertierenden Eingang des Regelverstärkers RV gelegt wird.

Der Regelverstärker RV mit der Verstärkung V regelt mit Hilfe des Stelltransistors T, der die Steilheit gmT besitzt, die am nicht invertierenden Eingang des Regelverstärkers liegende Ausgangsspannung des Summierers S3 auf die Referenzspannung ur aus, so daß die Leitungsklemmen a und b mit der vorgegebenen, durch die Impedanzübertragungsfunktion des Netzwerks IMP bestimmte Impedanz abgeschlossen werden.

Das Wechselsignal-Regelverhalten der erfindungsgemäßen Anordnung gemäß den FIG 1 und 2 wird anhand der FIG 3a und FIG 3b erläutert. FIG 3a zeigt das Regelungs-Blockschaltbild für den Empfangsweg, wenn der ferne Teilnehmer das Signal uf einspeist. An den Klemmen a und b liegt dann das Wechselspannungsignal uab als Sollsignal. Es sei angenommen, daß das Wechselsignal uab eingeprägt ist. Für die Verstärkung V des Regelverstärkers RV sei ein typischer Wert von 10 000 und für die Steilheit gmT des Stelltransistors T ein typischer Wert von 10 mS angenommen. Für das Produkt aus dem Stromfühlerwiderstand RS und dem dimensionslosen Übertragungsfaktor Ü des Impedanzübertragungsnetzwerks IMP ergibt sich ein typischer Wert zwischen 100 und 1000, der sehr viel größer ist als der Kehrwert des Produkts aus der Verstärkung V und der Steilheit gmT. Gemäß FIG 3a bestimmt sich dann der Strom iab aus dem Quotienten von uab und dem Produkt aus RS mit dem Übertragungsfaktor Ü. Wählt man für dieses Produkt den Wert der Leitungsimpedanz, dann ergibt sich der Wechselstrom iab als Quotient aus Wechselspannung uab und Abschlußimpedanz.

FIG 3b zeigt das Wechselsignalregelverhalten der Anordnung gemäß FIG 1 bzw. FIG 2 bei Einspeisung eines Sendesignals us als Sollsignal. Der durch den Stelltransistor T fließende Strom iab wird einerseits über die Leitungsimpedanz ZL und andererseits über den Stromfühlerwiderstand RS und den Übertragungsfaktor Ü des Impedanzübertragungsnetzwerks IMP zu einem Subtrahierer geführt, der die Signale mit dem Sendesignal vergleicht und die Regeldifferenz anschließend über den Regelverstärker RV mit der Verstärkung V und den Stelltransistor T ausregelt. Unter der für FIG 3a getroffenen Voraussetzung für die Werte von V, gmT, RS und Ü, wobei das Produkt aus RS und Ü gleich der Abschlußimpedanz sein soll, ergibt sich, daß der Strom iab gleich dem Quotienten aus der Sendespannung us und der Summe aus Leitungsimpedanz ZL und Abschlußimpedanz RS x Ü ist. Als Ersatzschaltbild für die Anordnung zwischen den Klemmen a und b gemäß FIG 2 ergibt sich eine Stromquelle mit dem Strom us dividiert durch die Summe aus der Abschlußimpedanz und der Leitungsimpedanz. Für die Spannung uab an den Klemmen a und b ergibt sich das negative Produkt aus der Sendespannung us und dem Quotienten aus Leitungsimpedanz ZL bezogen auf die Summe aus Leitungsimpedanz ZL und Abschlußimpedanz. Für die Grenzfälle ergibt sich folgendes: Bei Leerlauf ist die Leitungsimpedanz ZL gleich unendlich und der Strom iab gleich Null. Die Spannung uab entspricht dann der negativen Sendespannung us. Dabei pflanzt sich die Sendespannung us rückwärts auf die Leitung, da durch keinen der vorhandenen Widerstände Ströme fließen. Beim Grenzfall Kurzschluß ist die Leitungsimpedanz ZL gleich Null und die Spannung uab ebenfalls Null. Der Strom iab ergibt sich aus der Sendespannung us und der Abschlußimpedanz der Anordnung. Im Fall der Anpassung ist die Abschlußimpedanz zwischen den Klemmen a, b gleich der Leitungsimpedanz ZL. Die Spannung uab ist dann gleich der negativen halben Sendespannung us.

Gemäß FIG 1 sei erläutert, wie sich mit der Wechselsignal-Regelschaltung gemäß FIG 2 eine Zweidraht-Vierdraht-Umsetzung kombinieren läßt. Dazu dienen das Anpasssungsübertragungsnetzwerk NB und der Subtrahierer S4, deren Schaltung bereits beschrieben ist. Das an den Klemmen a und b auftretende Wechselspannungssignal uab ist die Summe aus dem Empfangssignal u'f und dem Sendesignal u's, wobei sich u's aus dem Produkt von Sendestrom is und Leitungsimpedanz ergibt und der Sendestrom is eine Funktion des Sendesignals us sowie der Leitungs- und Abschlußimpedanz ist. Das Empfangssignal u'f ist das an den Klemmen a und b tatsächlich empfangene Signal uf des fernen Teilnehmers.

Am Ausgang des Substrahierers S3 liegt somit die Summe aus dem Empfangssignal u'f und des aus dem Sendestrom is gebildeten Signals u's. Am Ausgang des Anpassungsübertragungsnetzwerks NB ergibt sich ebenfalls das Signal u's aus dem Sendesignal us, das mit der Anpassungsübertragungsfunktion bewertet ist. Das bedeutet, daß in dem Anpassungsübertragungsnetzwerk der Zusammenhang zwischen dem Signal u's und dem Sendesignal us nachgebildet werden muß. Die Subtraktion vom Ausgangssignal des Subtrahierers S3 liefert idealerweise das Empfangssignal u'f an der Empfangsklemme Ek. Bei fehlerhafter Nachbildung des Signals u's addiert sich dann zum Empfangssignal an der Empfangsklemme ein Teil des Sendesignals (Rückhörbezugsdämpfung).

Mit Hilfe der zuvor beschriebenen Anordnung läßt sich die Güte der gemäß FIG 2 beschriebenen Regelung prüfen. Speist man das Sendesignal us ein, dann ist bei Anpassung, also wenn die Abschlußimpedanz an den Klemmen a und b gleich der Leitungsimpedanz ZL ist, die Spannung an den Klemmen a, b gleich der invertierten halben Sendespannung us. Wählt man nun die Anpassungsübertragungsfunktion des Netzwerks NB als Multiplikationsfaktor von - 1/2, dann darf an der Empfangsklemme Ek idealerweise keine Spannung auftreten. Tatsächlich läßt sich eine Rückhörbezugsdämpfung von - 30 dB oder besser erreichen.

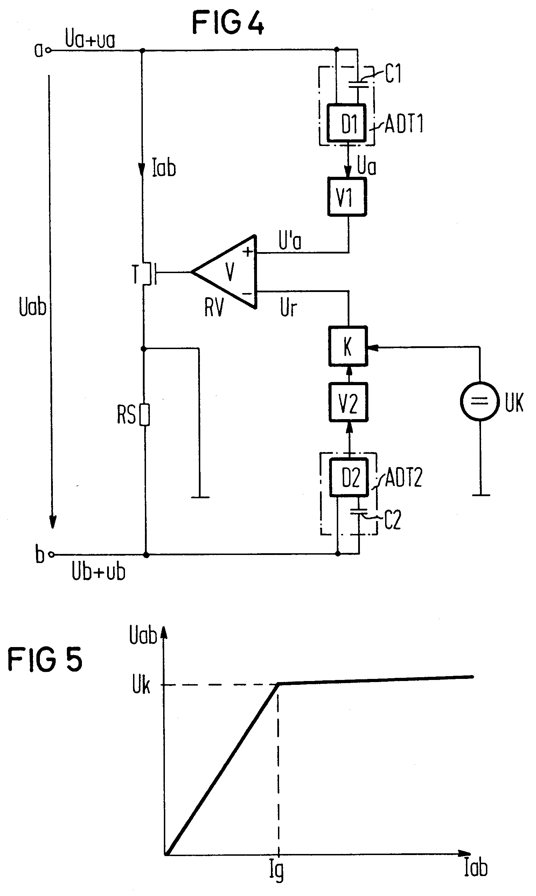

Eine weitere vorteilhafte Ausgestaltung der Leitungsabschlußanordnung gemäß FIG 1 bzw. FIG 2 ist die Einbeziehung einer Gleichspannungskennlinien-Regelung, die anhand von FIG 4 erläutert wird. Ebenso wie in den vorhergehenden Figuren sind gleiche Elemente mit gleichen Bezugszeichen versehen.

Die Gleichsignalkennlinien-Regelung ist von der Wechselsignalregelung entkoppelt, so daß sich die Regelkreise gegenseitig nicht beeinflussen. Die Gleichsignalkennlinien-Regelung kann deshalb auch in Anordnungen eingesetzt werden, die keine Wechselsignalregelung aufweisen.

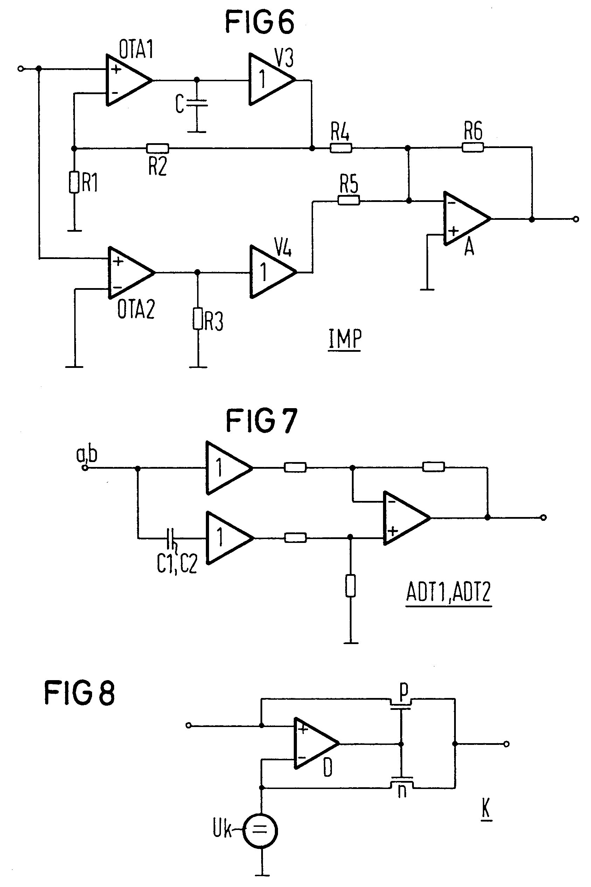

Mit der Anordnung gemäß FIG 4 läßt sich eine Kennlinie gemäß FIG 5 realisieren. Dabei steigt die Gleichspannung Uab zwischen den Klemmen a und b bis zur Knickspannung Uk linear mit dem Gleichstrom Iab durch den Transistor T und den Stromfühlerwiderstand RS an. Oberhalb des durch die Knickspannung Uk bestimmten Grenzstroms Ig wird die Gleichspannung begrenzt. Gemäß FIG 4 wird der lineare Teil und der begrenzte Teil der Gleichsignalkennlinie mit jeweils einem eigenen Regelkreis realisiert. Erreicht der Gleichstrom Iab den Grenzwert Ig, dann wird von einem Regelkreis auf den anderen unstetig mit Hilfe des Komparators K umgeschaltet. Der entstehende Knick in der Gleichsignalcharakteristik wirkt sich auf die Wechselsignalregelung nicht aus, da beide Regelkreise voneinander unabhängig sind.

Bei der Regelung im linearen Teil der Kennlinie wird die Drain-Source-Spannung des Stelltransistors T mit steigendem Strom Iab linear hochgeregelt. Die Gleichspannung Uab ist gleich der Summe aus der Drain-Source-Spannung und dem Produkt aus dem Gleichstrom Iab und dem Stromfühlerwiderstand RS. Andererseits ist der Strom Iab gleich der Differenz aus Drain-Source-Spannung von T und der Referenzspannung Ur am Ausgang des Verstärkers V2, die mit dem Verstärkungsfaktor V des Regelverstärkers RV und der Steilheit gmT von T multipliziert wird. Die Referenzspannung Ur hängt dabei vom Produkt aus Strom Iab, Stromfühlerwiderstand RS und Übertragungsfaktor des Verstärkers V2 ab. Unter der Annahme, daß der Kehrwert aus Verstärkungsfaktor V und Steilheit gmT klein ist gegenüber dem Produkt aus Stromfühlerwiderstand RS und Übertragungsfaktor des Verstärkers V2 ist der Strom Iab gleich dem Quotienten aus der Drain-Source-Spannung des Transistors T und dem Produkt aus RS und dem Übertragungsfaktor von V2. Wählt man für den Verstärker V2 einen aus einem beschalteten Operationsverstärker erzeugten nicht invertierenden Verstärker, dann läßt sich der Verstärkungsfaktor über zwei Widerstände der Beschaltung des Operationsverstärkers einstellen. Bei einem Verstärkungs- bzw. Übertragungsfaktor des Verstärkers V2 von 18 und einem Stromfühlerwiderstand von 22 Ohm ergibt sich die Spannung Uab als das Produkt aus dem Strom Iab und einem Widerstand von 440 Ohm.

Im begrenzten Teil der Regelung wird die Drain-Source-Spannung des Transistors T konstant geregelt. Bedingt durch den Spannungsabfall am Stromfühlerwiderstand RS steigt allerdings die Gleichspannung an den Klemmen a und b mit kleiner Steigung an, wie in FIG 5 gezeigt. Die Umschaltung auf die Knickspannung Uk erfolgt mit Hilfe des Komparators K, so daß dann die Referenzspannung Ur gleich der Knickspannung Uk ist. Unter der Annahme eines genügend großen Verstärkungsfaktors des Regelverstärkers RV wird bei der Regelung die Störgröße Uab und der Einfluß der Stromquelle des Transistors T eliminiert. Ebenfalls mit der Verstärkung V kann die Stationärgenauigkeit eingestellt werden. Dann ergibt sich, daß die Drain-Source-Spannung von T gleich der Knickspannung Uk ist.

Die Einbeziehung der Regelung gemäß FIG 4 in die Regelung gemäß FIG 2 erfolgt durch die Summierer S1 und S2. Für die Realisierung ist wichtig, daß die Gleichspannung Ua im Verstärker V1 mit einem Faktor multipliziert wird, der eine Pegelkorrektur bewirkt.

FIG 6 zeigt das Prinzipschaltbild eines Ausführungsbeispiels eines Impedanzübertragungsnetzwerks IMP. Das Netzwerk enthält ein aktives RC-Glied aus den Elementen OTA1, V3, C, R1 und R2. Die Elemente OTA2, V4 und R3 bilden ein Proportionalglied und die Elemente R4 bis R6 und A einen Addierer. Bei der Berechnung des Ausgangssignals am Element A bezogen auf ein Eingangssignal ergibt sich ein komplexer Übertragungsfaktor Ü. Alle Elemente der Anordnung gemäß FIG 6, also auch die Kapazität C, sind integrierbar.

FIG 7 zeigt ein Prinzipschaltbild eines Ausführungsbeispiels für die Trennung von Gleich- und Wechselsignalen mit den Funktionsblöcken ADT1 und ADT2. Den Klemmen a bzw. b sind einmal direkt und zum anderen über einen Entkopplungskondensator C1 bzw. C2 Entkopplungsverstärker nachgeschaltet. Die Ausgangssignale beider Verstärker werden in einem Subtrahierer aus den nicht näher bezeichneten Widerständen und dem Operationsverstärker voneinander subtrahiert. Am Ausgang des nicht näher bezeichneten Operationsverstärkers liegt dann das Gleichspannungssignal Ua bzw. Ub an.

Gemäß FIG 8 ist das Prinzip eines Ausführungsbeispiels für einen Komparator K dargestellt, der aus dem Differenzverstärker D und den ausgangsseitig angesteuerten n- bzw. p-Kanal-Transistoren besteht. Der Ausgangskreis des n-Kanal-Transistors ist zwischen die Ausgangsklemme des Komparators und den invertierenden Eingang, der Ausgangskreis des p-Kanal-Transistors zwischen die Ausgangsklemme des Komparators K und den nicht invertierenden Eingang geschaltet, der außerdem mit dem Verstärker V2 verbunden ist. Am invertierenden Eingang des Differenzverstärkers D ist außerdem die Spannungsquelle mit der Knickspannung Uk angeschlossen.

Die Anpassung der erfindungsgemäßen Anordnung an unterschiedliche Telefonleitungen erfolgt bezüglich der Abschlußimpedanz mit Hilfe des Impedanzübertragungsnetzwerks IMP, beispielsweise über die Widerstände R1 bis R6 und C, die Angleichung des Anpassungsübertragungsnetzwerks NB erfolgt entsprechend der unterschiedlichen Leitungsimpedanzen bzw. Abschlußimpedanzen beispielsweise mit aktiven Elementen wie in FIG 6 erläutert. Bei Anpassung der Leitung, d.h. bei Gleichheit von Leitungsimpedanz und Abschlußimpedanz besitzt das Anpassungsübertragungsnetzwerk den reellen Multiplikationsfaktor 1/2. Die Anpassung der Gleichspannungskennlinie an unterschiedliche Telefonleitungen kann mit Hilfe der Gleichspannung Uk bzw. des Verstärkungsfaktors des Verstärkers V2, also der Einstellelemente des Gleichsignalkennlinien-Übertragungsnetzwerks erfolgen. Zweckmäßigerweise sind die Einstellelemente der erfindungsgemäßen Anordnung programmierbar.

## Patentansprüche

1. Verfahren zur Bildung des Leitungsabschlusses an zwei Leitungsklemmen (a, b) einer Telefonleitung, **dadurch gekennzeichnet,** daß die Wechselsignale (ua, ub) an den Leitungsklemmen (a, b) von den dort ebenfalls anliegenden Gleichsignalen (Ua, Ub) getrennt, auf eine Bezugsgröße (Bezugspotential) bezogen und zu einem Sendesignal (us) an einer Sendeklemme (Sk) addiert werden, daß das resultierende Istwertsignal mit Hilfe eines Regelverstärkers (RV) mit einem Referenzsignal (ur) verglichen wird, das durch Bewertung des Wechselsignals (ub) der an einem Stromfühlerwiderstand (RS) angeschlossenen Leitungsklemme (b) mit einer der gegebenen Abschlußimpedanz entsprechenden Impedanzübertragungsfunktion gebildet wird, und daß der Regelverstärker (RV) einen den Strom (Iab, if, is) zwischen den Leitungsklemmen (a, b) bestimmenden Stelltransistor (T), dem der Stromfühlerwiderstand (RS) zugeordnet ist, steuert.

2. Verfahren nach Anspruch 1, **dadurch gekennzeichnet,** daß die auf eine Bezugsgröße (Bezugspotential) bezogenen Wechselsignale (u'f + u's) an den Leitungsklemmen (a, b) mit einem Signal (u's) verglichen werden, das durch Bewertung des Sendesignals (us) mit einer sich aus dem Impedanzverhältnis von Telefonleitung (ZL) zu Leitungsabschluß ergebenden Anpassungsübertragungsfunktion gebildet wird.

3. Verfahren nach Anspruch 1 oder 2, **dadurch gekennzeichnet,** daß die jeweils von den Wechselsignalen (ua, ub) getrennten Gleichsignale (Ua, Ub) der Leitungsklemmen (a, b) einerseits verstärkt zum Istwertsignal addiert und andererseits bewertet mit einer Gleichsignalkennlinien-Übertragungsfunktion zum Referenzsignal (ur) addiert werden.

4. Anordnung zur Durchführung des Verfahrens nach einem der Ansprüche 1 bis 3, **dadurch gekennzeichnet,** daß den Leitungsklemmen (a, b) jeweils Mittel (ADT1, (ADT2) zur Trennung der anliegenden Gleich- und Wechselsignale nachgeschaltet werden,
daß beide Wechselsignale (ua, ub) durch Mittel zur Subtraktion (S3) auf eine Bezugsgröße (Bezugspotential) bezogen und durch Mittel zur Addition (S1) zum Sendesignal (us) der Sendeklemme (Sk) addiert werden und das resultierende Istwertsignal dann auf einen Eingang (+) des Regelverstärkers (RV) geführt wird, an dessen zweiten Eingang (-) ein Referenzsignal (ur) liegt, das aus dem durch ein Impedanzübertragungsnetzwerk (IMP) bewerteten Wechselsignal (ub) der an dem Stromfühlerwiderstand (RS) angeschlossenen Leitungsklemme (b) gebildet wird, und daß der Regelverstärker (RV) mit dem Steuereingang eines zwischen die zwei Leitungsklemmen (a, b) der Telefonleitung geschalteten Stelltransistors (T) mit zugeordnetem Stromfühlerwiderstand (RS) verbunden ist.

5. Anordnung nach Anspruch 4, **dadurch gekennzeichnet,** daß von den auf eine Bezugsgröße bezogenen Wechselsignalen (u'f + u's) in einem Subtrahierer (S4) ein Signal (u's) subtrahiert wird, das aus dem durch ein Anpassungsübertragungsnetzwerk (NB) bewerteten Sendesignal (us) gebildet wird, und der Subtrahiererausgang mit einer Empfangsklemme (Ek) verbunden ist.

6. Anordnung nach Anspruch 5, **dadurch gekennzeichnet,** daß bei Übereinstimmung der Impedanzen von Telefonleitung (ZL) und der Anordnung das Anpassungsübertragungsnetzwerk (NB) die konstante Übertragungsfunktion 1/2 realisiert.

7. Anordnung nach einem der Ansprüche 4 bis 6, **dadurch gekennzeichnet,** daß die jeweiligen von den Wechselsignalen (ua, ub) getrennten Gleichsignale (Ua, Ub) einerseits verstärkt (V1) über einen ersten Addierer (S1) zum Istwertsignal addiert und andererseits durch ein Gleichsignalkennlinien-Übertragungsnetzwerk (V2, Uk, K) bewertet und über einen zweiten Addierer (S2) zum Referenzsignal (ur) addiert werden.

8. Anordnung nach Anspruch 7, **dadurch gekennzeichnet,** daß das Gleichsignalkennlinien-Übertragungsnetzwerk (V2, Uk, K) einen Komparator (K) enthält, der eingangsseitig einerseits mit einer Gleichsignalquelle (Uk) und andererseits über einen Verstärker (V2) mit den der entsprechenden Leitungsklemme (b) zugeordneten Mitteln (ADT2) zur Trennung der Gleich- und Wechselsignale verbunden ist.

9. Anordnung nach Anspruch 7 oder 8, **dadurch gekennzeichnet,** daß die die Übertragungsfunktionen bestimmende Elemente des Impedanzübertragungs-, Anpassungsübertragungs- und Gleichsignalkennlinien-Übertragungsnetzwerks (IMP, NB, V2, Uk, K) einstellbar sind.

10. Anordnung nach einem der Ansprüche 4 bis 9,
**gekennzeichnet** durch zumindest teilweise Ausführung als integrierte Schaltung mit aktiven Elementen.

## Claims

1. Method for forming the line termination at two line terminals (a, b) of a telephone line, characterized in that the AC signals (ua, ub) at the line terminals (a, b) are separated from the DC signals (Ua, Ub) also present there, referred to a reference variable (reference potential) and added to a transmit signal (us) at a transmit terminal (Sk), in that the resultant actualvalue signal is compared with the aid of a control amplifier (RV) with a reference signal (ur) which is formed by weighting the AC signal (ub) of the line terminal (b) connected to a current sensing resistor (RS) with an impedance transfer function corresponding to the given terminating impedance, and in that the control amplifier (RV) controls an adjusting transistor (T), to which the current sensing resistor (RS) is allocated and which determines the current (Iab, if, is) between the line terminals (a, b).

2. Method according to Claim 1, characterized in that the AC signals (u'f + u's) at the line terminals (a, b), which are referred to a reference variable (reference potential), are compared with a signal (u's) which is formed by weighting the transmit signal (us) with a matching transfer function resulting from the impedance ratio between telephone line (ZL) and line termination.

3. Method according to Claim 1 or 2, characterized in that the DC signals (Ua, Ub), in each case separated from the AC signals (ua, ub), of the line terminals (a, b) are added amplified to the actual-value signal, on the one hand, and, on the other hand, are added to the reference signal (ur), weighted with a DC signal characteristic transfer function.

4. Arrangement for carrying out the method according to one of Claims 1 to 3, characterized in that the line terminals (a, b) are in each case followed by means (ADT1, ADT2) for separating the DC and AC signals present,
in that both AC signals (ua, ub) are referred to a reference variable (reference potential) by means for subtraction (S3) and are added to the transmit signal (us) of the transmit terminal by means for addition (S1) and the resultant actual-value signal is then conducted to an input (+) of the control amplifier (RV), at the second input (-) of which a reference signal (ur) is present which is formed from the AC signal (ub), weighted by an impedance transfer network (IMP), of the line terminal (b) connected to the current sensing resistor (RS), and in that the control amplifier (RV) is connected to the control input of an adjusting transistor (T), connected between the two line terminals (a, b) of the telephone line, with associated current sensing resistor (RS).

5. Arrangement according to Claim 4, characterized in that a signal (u's), which is formed from the transmit signal (us) weighted by a matching transfer network (NB), is subtracted from the AC signals (u'f + u's) referred to a reference variable, in a subtractor (S4), and the subtractor output is connected to a receive terminal (Ek).

6. Arrangement according to Claim 5, characterized in that when the impedances of the telephone line (ZL) and the arrangement correspond, the matching transfer network (NB) achieves the constant transfer function 1/2.

7. Arrangement according to one of Claims 4 to 6, characterized in that the respective DC signals (Ua, Ub) separated from the AC signals (ua, ub) are added amplified (V1) to the actual-value signal via a first adder (S1), on the one hand, and, on the other hand, are weighted by a DC signal characteristic transfer network (V2, Uk, K) and added to the reference signal (ur) via a second adder (S2).

8. Arrangement according to Claim 7, characterized in that the DC signal characteristic transfer network (V2, Uk, K) contains a comparator (K), the input of which is connected, on the one hand, to a DC signal source (Uk) and, on the other hand, via an amplifier (V2) with means (ADT2), allocated to the corresponding line terminal (b), for separating the DC and AC signals.

9. Arrangement according to Claim 7 or 8, characterized in that the elements of the impedance transfer, matching transfer and DC signal characteristic transfer network (IMP, NB, V2, Uk, K) determining the transfer functions are adjustable.

10. Arrangement according to one of Claims 4 to 9, characterized by at least a partial construction as integrated circuit with active elements.

## Revendications

1. Procédé de réalisation de la terminaison de lignes au niveau de deux bornes de ligne (a,b) d'une ligne téléphonique, caractérisé en ce que les signaux alternatifs (ua, ub) qui sont présents au niveau des bornes de ligne (a, b) sont, séparément des signaux continus (Ua, Ub) présents également au niveau de ces bornes, rapportés à une grandeur de référence (potentiel de référence) et sont additionnés à un signal d'émission (us) présent au niveau d'une borne d'émission (Sk), que le signal de valeur instantanée qui en résulte est comparé, à l'aide d'un amplificateur de régulation (RV), à un signal de référence (ur) qui est formé par évaluation du signal alternatif (ub) de la borne de ligne (b) reliée à une résistance de détection de courant (RS), à l'aide d'une fonction de transfert d'impédance correspondant à l'impédance de terminaison donnée, et que l'amplificateur de régulation (RV) commande un transistor de réglage (T) qui détermine le courant (Iab, if, is) entre les bornes de ligne (a, b) et qui est associé à la résistance de détection de courant (RS).

2. Procédé suivant la revendication 1, caractérisé en ce que que les signaux alternatifs (u'f + u's), qui sont rapportés à une grandeur de référence (potentiel de référence) et qui sont appliqués aux bornes de ligne (a, b), sont comparés à un signal (u's) qui est formé par évaluation du signal d'émission (us) à l'aide d'une fonction de transfert d'adaptation obtenue à partir du rapport d'impédance de la ligne téléphonique (ZL) sur la terminaison de ligne.

3. Procédé suivant la revendication 1 ou 2, caractérisé en ce que les signaux continus (Ua, Ub) des bornes de ligne (a, b), qui sont séparés des signaux alternatifs (ua, ub), sont, d'une part, amplifiés et additionnés au signal de valeur instantanée, et sont, d'autre part, additionnés au signal de référence (ur), en étant évalués à l'aide d'une fonction de transfert à caractéristique de signal continu.

4. Dispositif de mise en oeuvre du procédé suivant l'une des revendications 1 à 3, caractérisé en ce qu'en aval des bornes de ligne (a, b), sont respectivement prévus des moyens (ADT1, ADT2) pour la séparation des signaux continus et alternatifs qui y sont présents,
que les deux signaux alternatifs (ua, ub) sont rapportés, par des moyens de soustraction (S3), à une grandeur de référence (potentiel de référence), et que, par des moyens d'addition (S1), ils sont additionnés au signal d'émission (us) de la borne d'émission (Sk), et que le signal de valeur instantanée qui en résulte est alors envoyé à une entrée (+) de l'amplificateur de régulation (RV), à la deuxième entrée (-) duquel est appliqué un signal de référence (ur), qui est formé à partir du signal alternatif (ub), évalué par un réseau de transfert d'impédance (IMP), de la borne de ligne (b) reliée à la résistance de détection de courant (RS), et que l'amplificateur de régulation (RV) est relié à l'entrée de commande d'un transistor de réglage (T) qui est branché entre les deux bornes de ligne (a, b) de la ligne téléphonique et qui comporte la résistance de détection de courant associée (RS).

5. Dispositif suivant la revendication 4, caractérisé en ce que des signaux alternatifs (u'f + u's) rapportés à une grandeur de référence est soustrait, dans un soustracteur (S4), un signal (u's) qui est formé à partir du signal d'émission (us) évalué par un réseau de transfert d'adaptation (NB), et que la sortie du soustracteur est reliée à une borne de réception (Ek).

6. Dispositif suivant la revendication 5, caractérisé en ce que, lors de la concordance des impédances de la ligne téléphonique (ZL) et du dispositif, le réseau de transfert d'adaptation (NB) réalise la fonction de transfert constante 1/2.

7. Dispositif suivant l'une des revendications 4 à 6, caractérisé en ce que les signaux continus (Ua, Ub) séparés respectivement des signaux alternatifs (ua, ub) sont, d'une part, additionnés au signal de valeur instantanée, en étant amplifiés (V1), par l'intermédiaire d'un premier additionneur (S1), et sont, d'autre part, évalués par un réseau de transfert à caractéristiques de signaux continus (V2, Uk, K) et additionnés au signal de référence (ur), par l'intermédiaire d'un deuxième additionneur (S2).

8. Dispositif suivant la revendication 7, caractérisé en ce que le réseau de transfert à caractéristiques de signaux continus (V2, Uk, K) comporte un comparateur (K) qui est relié, côté entrée, d'une part, à une source de signaux continus (Uk) et, d'autre part, par l'intermédiaire d'un amplificateur (V2), aux moyens (ADT2) de séparation des signaux continus et alternatifs qui sont associés à la borne de ligne (b) correspondante.

9. Dispositif suivant la revendication 7 ou 8, caractérisé en ce que les éléments, déterminant les fonctions de transfert, du réseau de transfert d'impédance, du réseau de transfert d'adaptation et du réseau de transfert à caractéristiques de signaux continus (IMP, NB, V2, Uk, K), sont susceptibles d'être réglés.

10. Dispositif suivant l'une des revendications 4 à 9, caractérisé en ce qu'il peut être réalisé, au moins en partie, en tant que circuit intégré à éléments actifs.
